(19) Europäisches Patentamt
European Patent Office
Office européen des brevets

(11) **EP 3 030 038 A1**

(12) **EUROPEAN PATENT APPLICATION**
published in accordance with Art. 153(4) EPC

(43) Date of publication:
**08.06.2016 Bulletin 2016/23**

(21) Application number: **13881208.6**

(22) Date of filing: **03.12.2013**

(51) Int Cl.:
***H04W 84/12*** (2009.01)

(86) International application number:
**PCT/CN2013/088407**

(87) International publication number:
**WO 2014/161341 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.07.2013 CN 201310328953**

(71) Applicant: ZTE Corporation
**Shenzhen, Guangdong 518057 (CN)**

(72) Inventors:
 • YU, Zhong
  **Shenzhen**
  **Guangdong 518057 (CN)**
 • GUO, Yang
  **Shenzhen**
  **Guangdong 518057 (CN)**

(74) Representative: **Awapatent AB**
**Junkersgatan 1**
**582 35 Linköping (SE)**

(54) **METHOD AND APPARATUS FOR IMPLEMENTING WIRELESS BODY AREA NETWORK**

(57) Disclosed are a method and apparatus for implementing a wireless body area network (WBAN). The present invention relates to multiple input multiple output MIMO technologies; and more particularly to a method and apparatus for implementing a wireless body area network. The method includes: performing a spread spectrum on channels in a WBAN system; performing a connection interference cancellation on spread-spectrum signals in accordance with an intensity. The technical solution provided in the embodiment of the present invention is applicable to a WBAN to realize a WBAN with an optimized signal propagation effect.

Establish a WBAN system channel model — 201

Perform a spread spectrum on
the channels in the WBAN system — 202

Perform a connection interference cancellation
on the spread-spectrum signals according to
the intensity — 203

FIG. 2

EP 3 030 038 A1

## Description

### Technical Field

The present invention relates to a wireless body area network (WBAN) wireless communication system, relates to multiple input and multiple output (MIMO) technologies, and more particularly, to a method and apparatus for implementing a WBAN having high efficient interference cancellation capability.

### Background of the Related Art

The WBAN technology is an integration of micro-sensor technology, biomedical technology and wireless communications technology, and because of its low power consumption, high reliability, high data rate and other features, it becomes the key technical support of the things of internet and can provide ubiquitous medical services, and becomes a widespread concerning focus in the medical community, the business community and the academic community.

The WBAN system communication has the following feature: the design principle which must be followed by the WBAN system is low power consumption, and because the WBAN system uses the human body as a channel, various human tissue parameters lead to complex channel conditions and affect the signal propagation.

### Summary of the Invention

The present invention provides a method and system for implementing wireless body area network to solve the problem that human tissue parameters lead to complex channel conditions and further affect the signal propagation.

A method for implementing wireless body area network, in a multipath MIMO WBAN, wherein the method comprises:

performing a spread spectrum on channels in a WBAN system;

performing a connection interference cancellation on spread-spectrum signals in accordance with an intensity.

Preferably, a pulse amplitude modulation (PAM/DS UWB) signal uses a zero correlation duration (ZCD) sequence as a spreading code, said performing a spread spectrum on channels in the WBAN system comprises:

at a transmitting end, calculating signals on the $n^{th}$ transmitting antenna according to the following expression:

$$x_n(t) = \sum_{i=-\infty}^{\infty} \sqrt{E_s} d_n(i) p(t - iT_s)$$,

wherein, $d_n(i)$ is the $i^{th}$ information symbol on the $n^{th}$ transmitting antenna and $d_n(i) = b_n(i)c_n$, $b_n(i)$ is a data sequence on the $n^{th}$ transmitting antenna, $c_n$ is the $n^{th}$-path ZCD sequence, $E_s$ is the energy of the basic pulse $p^{(t)}$, $T_s$ is an average pulse repetition period;

at the transmitting end, calculating a periodic cross-correlation function of two ZCD sequences $C_k^{(x)}$ and $C_k^{(y)}$ according to the following expression:

$$C_{x,y}(\tau) = \sum_{k=0}^{K-1} \oplus c_k^{(x)} c_k^{(y)}$$,

wherein K is a sequence period, $\oplus$ denotes summation of modulo K;
at a receiving end, calculating a received signal $y_m(t)$ according to the following expression:

$$y_m(t) = \sum_{n=1}^{N} \sum_{l=0}^{L} h_{m,n}(l) x_n(t - lT_p) + n_m(t)$$,

wherein, $h_{m,n}(l)$ denotes an attenuation coefficient of signals in the $l^{th}$ path transmitted by the $n^{th}$ transmitting antenna and received on the $m^{th}$ receiving antenna, and $n_m(t)$ denotes additive white Gaussian noise.

Preferably, for the two ZCD sequences, when side lobes are minimum, both an autocorrelation function and a periodic cross-correlation function of the two ZCD sequences are 0.

Preferably, said performing a connection interference cancellation on the spread-spectrum signal in accordance with an intensity comprises:

using a zero forcing algorithm to obtain a pseudo-inverse matrix $G_i$ of a channel characteristic matrix $H$ according to the following expression:

$$G_i = H^+ = (H^H H)^{-1} H^H \,,$$

wherein, an initial value of i is 1, and i is not greater than the total number of paths $n_T$ at the transmitting end; sorting the signal-to-noise ratio of various paths, and obtaining a sorted result $L=\{k_i, k_{i+1}, ..., k_{n_T}\}$, detecting that the sub-information flow with maximum signal-to-noise ratio after the sorting is:

$$k_i = \arg\min_{j} \left\| (G_i)_j \right\|^2 \,;$$

calculating a weighted vector $w_{k_i} = (G_i)_{k_i}$ according to the zero forcing algorithm; for $k_i$, determining that the sub-information flow with maximum signal-to-noise ratio is valid when the weighted vector obtained according to the zero forcing algorithm meets the following expression:

$$w_{k_i}^T (H)_j = \begin{cases} 0 & j \neq k_i \\ 1 & j = k_i \end{cases} \,;$$

separating a first determination statistic from a received signal vector $y_{k_1}$ according to the following expression:

$$y_{k_i} = w_{k_i}^T r_i = \sum_{j=1}^{n_R} w_{k_i}^T (H)_j s_j + w_{k_i}^T \eta = s_{k_i} + w_{k_i}^T \eta \,,$$

wherein, $w_{k_i}^T \eta$ is the noise,

decoding $y_{k_1}$ according to the employed modulation method to obtain an estimated value of $s_{k_i}$ : $\hat{s}_{k_i} = Q(y_{k_i})$, wherein, $Q$ denotes a quantization processing;

re-modulating the $\hat{s}_{k_i}$ to obtain a corresponding received signal, and cancelling out from the received signal vector to obtain a new received signal vector according to the following expression:

$$r_{i+1} = y_1 - h_i \hat{s}_{k_i} \,,$$

wherein, $h_{k_i}$ is the $k_i$-th column of $H$ ;

judging whether the value of i is equal to $n_T$ or not, when the value of i is not equal to $n_T$, the value of i added by 1, repeating steps from calculating the pseudo inverse matrix $G_i$ to calculating the new received signal vector $r_i+1$.

Preferably, after detecting the sub-information flow $k_i$ with maximum signal-to-noise ratio, the method further comprises:

for $k_1$, when the weighted vector obtained according to the zero forcing algorithm does not meet the following expression,

$$w_{k_1}^T (H)_j = \begin{cases} 0 & j \neq k_1 \\ 1 & j = k_1 \end{cases} \,;$$

determining that the sub-information flow with maximum signal-to-noise ratio is invalid, and returning to calculate the pseudo-inverse matrix $G_i$.

Preferably, said re-modulating the $\hat{s}_{k_i}$, to obtain the corresponding received signal is:

Inverse-modulating the $\hat{s}_{k_i}$ according to a discovery modulation mode to obtain the corresponding received signal.

The present invention further provides an apparatus for implementing a wireless body area network, in a multipath MIMO WBAN, wherein the apparatus comprises:

a spread spectrum module, configured to: perform a spread spectrum on channels in the WBAN system;
an interference cancellation module, configured to: perform a connection interference cancellation on spread-spectrum signals in accordance with an intensity.

Preferably, a pulse amplitude modulation (PAM/DS UWB) signal uses a zero correlation duration (ZCD) sequence as a spreading code, said performing a spread spectrum on the channels in the WBAN system comprises:

a transmitting-end signal calculating unit, configured to: at the transmitting end, calculate signals on the $n^{th}$ transmitting antenna according to the following expression:

$$x_n(t) = \sum_{i=-\infty}^{\infty} \sqrt{E_s} d_n(i) p(t - iT_s)$$

,

wherein, $d_n(i)$ is the $i^{th}$ information symbol on the $n^{th}$ transmitting antenna and $d_n(i)=b_n(i)c_n$, $b_n(i)$ is a data sequence on the $n^{th}$ transmitting antenna, $c_n$ is the $n^{th}$-path ZCD sequence, $E_s$ is the energy of the basic pulse $p(t)$, and $T_s$ is an average pulse repetition period;
a transmitting-end periodic cross-correlation function calculating unit, configured to: at the transmitting end, calculate a periodic cross-correlation function of two ZCD sequences $C_k^{(x)}$ and $C_k^{(y)}$ according to the following expression:

$$C_{x,y}(\tau) = \sum_{k=0}^{K-1} \oplus c_k^{(x)} c_k^{(y)}$$

,

where, K is the sequence period, $\oplus$ denotes the summation of modulo K;
a receiving-end receiving signal calculating unit, configured to: at a receiving end, calculate a received signal $y_m(t)$ according to the following expression:

$$y_m(t) = \sum_{n=1}^{N} \sum_{l=0}^{L} h_{m,n}(l) x_n(t - lT_p) + n_m(t)$$

,

wherein, $h_{m,n}(l)$ denotes the attenuation coefficient of signals in the $l^{th}$ path transmitted by the $n^{th}$ transmitting antenna and received on the $m^{th}$ receiving antenna, and $n_m(t)$ denotes additive white Gaussian noise.

Preferably, the interference cancellation module comprises:

a pseudo-inverse matrix calculating unit, configured to: use a zero forcing algorithm to obtain a pseudo-inverse matrix $G_1$ of a channel characteristic matrix $H$ according to the following expression:

$$G_1 = H^+ = (H^H H)^{-1} H^H$$

,

a sub-information flow sorting unit, configured to: sort the signal-to-noise ratio of various paths to obtain a sorted result $L = \{k_1, k_2,...,k_{n_T}\}$, wherein $k_i = 1,2,...n_T$, and detect that the sub-information flow with maximum signal-to-noise ratio after the sorting is $k_1$ $k_1 = \arg\min_j \| (G_1)_j \|^2$;
a weighted vector calculating unit, configured to: calculate a weighted vector $w_{k_1} = (G_i)_{k_i}$ according to the zero forcing algorithm;

a determination unit, configured to: for the $k_1$, determine that the sub-information flow with maximum signal-to-noise ratio is valid when the weighted vector obtained according to the zero forcing algorithm meets the following expression:

$$ w_{k_1}^T (H)_j = \begin{cases} 0 & j \neq k_1 \\ 1 & j = k_1 \end{cases} ; $$

an estimated value calculating unit, configured to: separate a first determination statistic from the received signal vector $y_{k_1}$ according to the following expression:

$$ y_{k_1} = w_{k_1}^T r_1 = \sum_{j=1}^{n_R} w_{k_1}^T (H)_j s_j + w_{k_1}^T \eta = s_{k_1} + w_{k_1}^T \eta \ , $$

wherein, $w_{k_1}^T \eta$ is the noise,

decode $y_{k_1}$ according to the employed modulation method to obtain an estimated value of $s_{k_1}$ : $\hat{s}_{k_i} = Q(y_{k_i})$, where $Q$ denotes a quantization processing;

a received signal vector calculating unit, configured to: re-modulate the $\hat{s}_{k_i}$ to obtain a corresponding received signal, and cancel out from a received signal vector to obtain a new received signal vector according to the following expression:

$$ r_2 = y_1 - h_1 \hat{s}_{k_i} , $$

wherein, $h_{k_i}$ is the $k_i$-th column of $H$ ;

a process controlling unit, configured to: when the entire received signal vector is not separated and obtained, return to the sub-information flow sorting unit to separate the sub-information flow with second largest signal-to-noise ratio from the updated received signal vector.

Preferably, the determination unit is further configured to: for $k_1$, when the weighted vector obtained according to the zero forcing algorithm does not meet the following expression,

$$ w_{k_1}^T (H)_j = \begin{cases} 0 & j \neq k_1 \\ 1 & j = k_1 \end{cases} ; $$

determine that the sub-information flow with maximum signal-to-noise ratio is invalid, and return to the pseudo-inverse matrix calculating unit.

The embodiment of the present invention provides a method and apparatus for implementing a wireless body area network (WBAN), introduces the multipath MIMO technology in the WBAN, and then, it performs a spread spectrum on the channels in the WBAN system, and then performs a connection interference cancellation on the spread-spectrum signal according to the intensity, enhances the equalization performance of the successive interference cancellation (SIC), which solves the problem that human tissue parameters lead to complex channel conditions, thereby affecting the signal propagation.

**Brief Description of the Drawings**

FIG. 1 is a schematic diagram of an application environment in accordance with a first embodiment of the present invention;

FIG. 2 is a flow chart of a method for implementing a wireless body area network provided in the first embodiment of the present invention;

FIG. 3 is a specific flow chart of step 203 in FIG. 2;

FIG. 4 is a structural diagram of an apparatus for implementing a wireless body area network provided in a second embodiment of the present invention;

FIG. 5 is a structural diagram of spread spectrum module 401 in FIG. 4;

FIG. 6 is a structural diagram of interference cancellation module 402 in FIG. 4.

**Preferred Embodiments of the Invention**

The WBAN system communication has the following feature: the design principle which must be followed by the WBAN system is low power consumption, and the WBAN system takes human body as a channel, and various human tissue parameters lead to complex channel situation and affect the signal propagation.

To solve the abovementioned problem, the embodiment of the present invention provides a method and apparatus for implementing a wireless body area network. It can use the MIMO technology to improve the signal stability and improve the quality of the received signal in harsh channel conditions; when the multi-antenna technology is introduced into the system, the multipath effects will be produced under the circumstance that the channel is not ideal, so as to produce the inter-symbol interference (ISI) at the receiving end; the WBAN system networking is flexible, taking a star topology structure formed of one hub and several nodes on each human body as the basic unit, and the irregular movement of the topology unit makes the topology of the system inconstant, and different users share the same frequency band, resulting in the multiple access interference (MAI).

The Multiple Input and Multiple Output (MIMO) system can effectively increase the channel capacity and become a technology acquired much attention in the field of wireless communications. In the WBAN based multi-device ultra-wideband MIMO system, the inter-symbol interference (ISI), multiple access interference (MAI), multipath fading and other factors greatly reduce the system performance, an appropriate spreading code and a high efficient successive interference cancellation (SIC) mechanism can be designed to reduce the above interference and achieve diversity gain.

The UWB system based on the spread spectrum technology can be divided into pulse amplitude modulation (PAM/DS) system and pulse position modulation (PPM/TH) system, spreading codes with good correlation can be used to reduce the impact of MAI on the system, and a ZCD (zero correlation duration) code with large MAI tolerance can be chosen to solve the shortcoming of poor orthogonality of the PN (pseudo noise) code in the traditional PAM/DS system.

The successive interference cancellation algorithm is a MIMO equalization algorithm with low-complexity, because it uses the previous determination symbol to cancel the interference in subsequent symbols, the detection performance is better than the linear detection algorithm (ZF and MMSE), and while the SIC equalization performance is subject to the determination error, the order of the rows and columns in the channel transfer matrix can be changed for sorting, determining the most reliable signal in priority can appropriately reduce the determination error and enhance the SIC equalization performance to a certain extent, combined with the ZF guidelines, it can simplify the processing procedure and improve the detection efficiency of OSIC.

Hereinafter, in conjunction with the accompanying drawings, the embodiments of the present invention will be described in detail. It should be noted that, in the case of no conflict, embodiments and features in the embodiments of the present application may be arbitrarily combined with each other.

First, in conjunction with the accompanying drawings, the first embodiment of the present invention will be described.

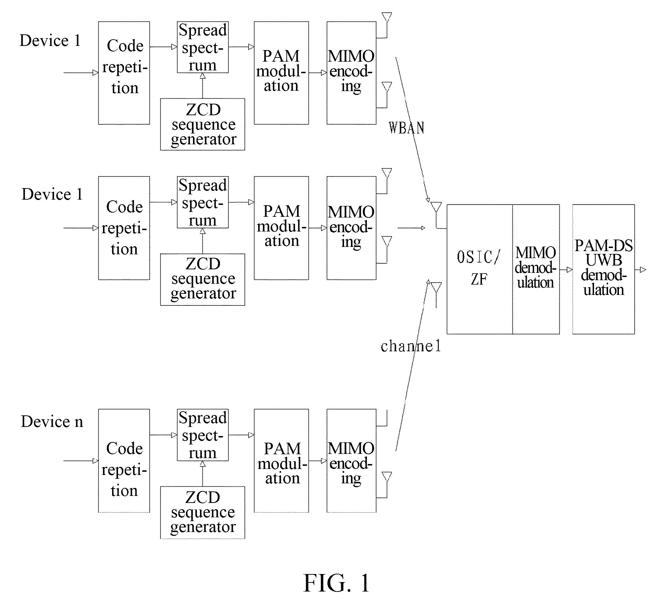

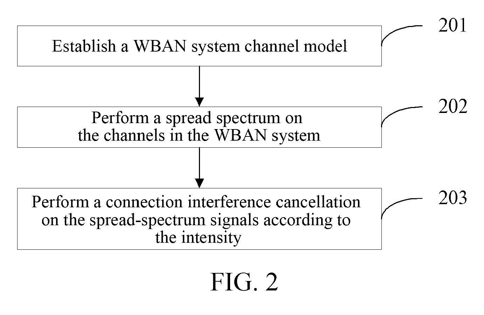

The application environment of the embodiment of the present invention is shown in FIG. 1, it is a WBAN based UWB/MIMO system. In the application environment, the process of using the method for implementing a wireless body area network provided in the embodiment of the present invention to complete the interference cancellation in the WBAN is shown in FIG. 2, comprising:

in step 201, it is to establish a WBAN system channel model;
this step is specifically as follows:

1, in the WBAN channel, the complex channel impulse response $h^i(t)$ of the $i$th device is:

$$h^i(t) = \sum_{l=0}^{L-1} \alpha_l^i \delta(t - \tau_l^i)$$

$$(1)$$

wherein, $L$ is the number of paths and is a Poisson random variable.

2, $\alpha_i$ is the amplitude of the $l$th path, and it can be expressed as:

$$\alpha_l^i = \Omega_0 \exp\left(-\frac{\tau_l^i}{\Gamma} - F_k[1-\delta(l)]\right)\beta \tag{2}$$

wherein, $\Omega_0$ denotes the path loss and is assumed to be the path loss in the free space, r is the exponential attenuation factor, $\beta$ is a logarithm standard random variable whose mean value is zero and variance is $\sigma^2$, $\tau_l^i$ is the arrival time of the path and is subject to the Poisson random process whose arrival rate is $\lambda$=1/0.50125$ns$.
3, $F_k$ denotes the impact of the K parameter under the NLOS environment and can be expressed as:

$$F_k = \frac{\Delta k \ln 10}{10} \tag{3}$$

wherein, $\Delta k$ is the amplitude difference of the first impulse response and the average impulse response. The correspondence between the human body orientation and $\Gamma$, $F_k$ and $\sigma$ is shown in Table 1.

Table 1 the correspondence between the human body orientation and channel parameters

| Human body orientation | $\Gamma[ns]$ | $F_k(\Delta k[dB])$ | $\sigma[dB]$ |
|---|---|---|---|
| 0 | 44.6346 | 5.111 (22.2) | 7.30 |
| 90 | 54.2868 | 4.348 (18.8) | 7.80 |
| 180 | 53.4186 | 3.638 (15.8) | 7.03 |
| 270 | 83.9635 | 3.983 (17.3) | 7.19 |

In step 202, it is to perform a spread spectrum on the channels in the WBAN system;
In this step, the PAM/DS UWB signal uses the ZCD sequence as a spreading code, and the specific implementation process is as follows:

1, at the transmitting end, it is to calculate the signals on the $n$th transmitting antenna according to the following expression:

$$x_n(t) = \sum_{i=-\infty}^{\infty} \sqrt{E_s} d_n(i) p(t - iT_s) \tag{4}$$

wherein, $d_n(i)$ is the $i$th information symbol on the $n$th transmitting antenna and $d_n(i)=b_n(i)c_n$, $b_n(i)$ is a data sequence on the $n$th transmitting antenna, $c_n$ is the $n$th-path ZCD sequence, $E_s$ is the energy of the basic pulse $p^{(t)}$, and $T_s$ is the average pulse repetition period;

2. at the transmitting end, a periodic cross-correlation function of two ZCD sequences $C_k^{(x)}$ and $C_k^{(y)}$ is calculated according to the following expression:

$$C_{x,y}(\tau) = \sum_{k=0}^{K-1} \oplus c_k^{(x)} c_k^{(y)} \tag{5}$$

where, K is a sequence period, $\oplus$ denotes the summation of modulo K. When side lobes are minimum, both the autocorrelation function and the periodic cross-correlation function are 0
3. At a receiving end, a received signal $y_m(t)$ is calculated according to the following expression:

$$y_m(t) = \sum_{n=1}^{N} \sum_{l=0}^{L} h_{m,n}(l)x_n(t - lT_p) + n_m(t)$$

$$(6)$$

wherein, $h_{m,n}(l)$ denotes the attenuation coefficient of signals in the $l^{th}$ path sent by the $n^{th}$ transmitting antenna and received by the $m^{th}$ receiving antenna, and $n_m(t)$ denotes the additive white Gaussian noise.

In step 203, it is to perform a connection interference cancellation on the spread-spectrum signal according to the intensity;

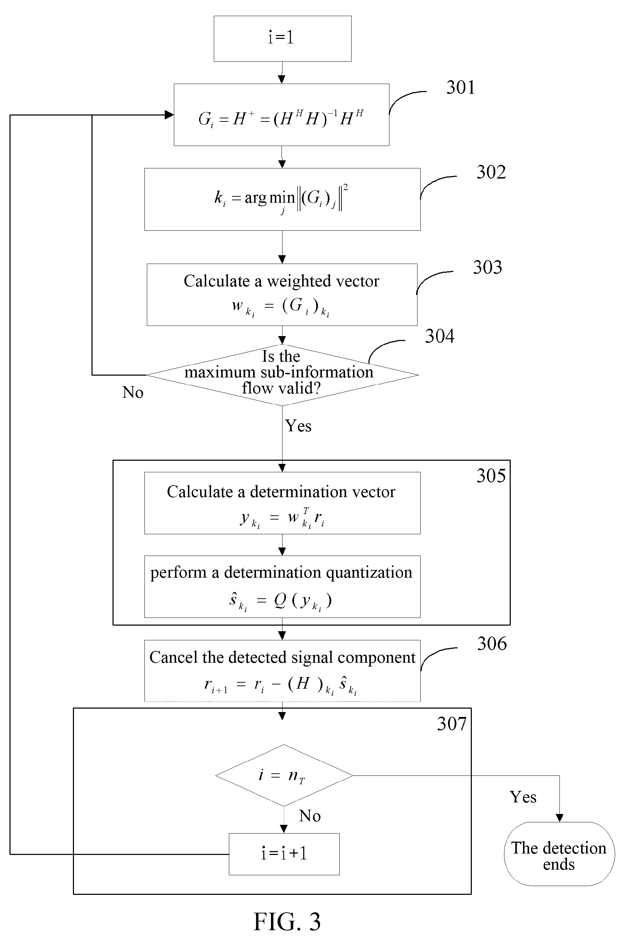

in this step, in order to overcome the error propagation problem in the traditional successive interference cancellation mechanism, it is to firstly sort the relevant intensity between the users, followed by the second strongest, and the specific process is shown in FIG. 3:

in step 301: it is to use a zero forcing algorithm to obtain a pseudo-inverse matrix $G_i$ of a channel characteristic matrix $H$ according to the following expression:

$$G_i = H^+ = (H^H H)^{-1} H^H,$$

Wherein, the initial value of i is 1, and i is not greater than the total number of paths $n_T$ at the transmitting end;

in step 302, it is to sort the SNR of various paths to obtain a sorted result $L = \{k_i, k_{i+1}, .., k_{n_T}\}$, and detect that the sub-information flow with maximum signal-to-noise ratio after the sorting is:

$$k_i = \arg\min_j \left\| (G_i)_j \right\|^2;$$

in step 303, it is to calculate a weighted vector $w_{k_i} = (G_i)k_i$ according to the zero forcing algorithm;

in step 304, for $k_i$, when the weighted vector obtained according to the zero forcing algorithm meets the following expression, it is to determine that the sub-information flow with maximum signal-to-noise ratio is valid:

$$w_{k_i}^T (H)_j = \begin{cases} 0 & j \neq k_i \\ 1 & j = k_i \end{cases};$$

when the abovementioned expression is not met, determine that the sub-information flow with maximum signal-to-noise ratio is invalid, and return to step 301, otherwise, proceed to step 305.

In step 305, it is to separate a first determination statistic from the received signal vector $y_{k_1}$, according to the following expression:

$$y_{k_i} = w_{k_i}^T r_i = \sum_{j=1}^{n_R} w_{k_i}^T (H)_j s_j + w_{k_i}^T \eta = s_{k_i} + w_{k_i}^T \eta,$$

wherein, $w_{k_i}^T \eta$ is the noise,

decoding the $y_{k_i}$ according to the employed modulation method to obtain the estimated value of $s_{k_i}$ : $\hat{s}_{ki}$, $= Q(y_{ki})$, wherein, $Q$ denotes the quantization processing;

in step 306: it is to re-modulate the $\hat{S}_{ki}$, to obtain a corresponding received signal, and cancel out from the received signal vector to obtain a new received signal vector according to the following expression:

$$r_{i+1} = y_1 - h_i \hat{s}_{k_i},$$

wherein, $h_{k_i}$ is the $k_i$-th column of $H$;

in step 307, it is to judge whether the value of i is equal to $n_T$ or not, when the value of i is not equal to $n_T$, add 1 to the value of i, and repeat steps 301 to 306.

Through the process of FIG. 3, it is to circularly detect the sub-information flow with maximum signal-to-noise ratio in the remaining sub-information flows and separate the second sub-information flow from the updated received signal vector. Every time when the cancellation of one sub-information flow is completed, i will be added by 1, then the above steps are repeated until the entire received signal vector is in turn separated and decoded.

In the following, in conjunction with the accompanying drawings, the second embodiment of the present invention will be described.

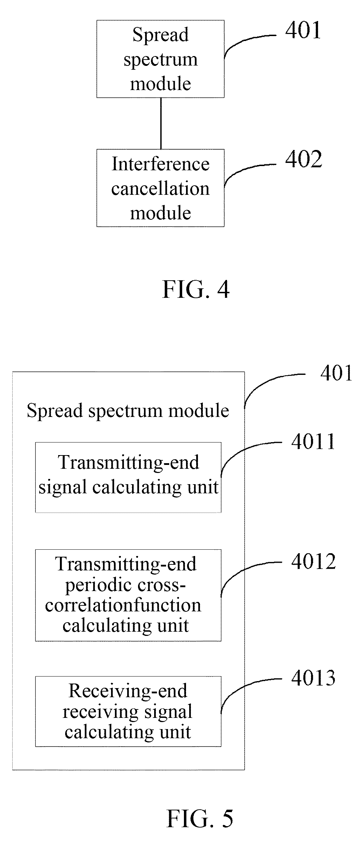

The embodiment of the present invention provides an apparatus for implementing a wireless body area network, and in a multipath MIMO WBAN, the structure of the apparatus is shown in FIG. 4, comprising:

a spread spectrum module 401, used to perform a spread spectrum on the channels in the WBAN system;
an interference cancellation module 402, used to perform a connection interference cancellation on the spread-spectrum signal according to the intensity.

Preferably, a pulse amplitude modulation (PAM/DS UWB) signal uses a zero correlation duration (ZCD) sequence as a spreading code, and the structure of the spread spectrum module 401 is shown in FIG. 5, comprising:

a transmitting-end signal calculating unit 4011, used to: calculate signals on the $n^{th}$ transmitting antenna at the transmitting end according to the following expression:

$$x_n(t) = \sum_{i=-\infty}^{\infty} \sqrt{E_s} d_n(i) p(t - iT_s)$$,

wherein, $d_n(i)$ is the $i^{th}$ information symbol on the $n^{th}$ transmitting antenna and $d_n(i) = b_n(i)c_n$, $b_n(i)$ is the data sequence on the $n^{th}$ transmitting antenna, $c_n$ is the $n^{th}$-path ZCD sequence, $E_s$ is the energy of the basic pulse $p(t)$, and $T_s$ is the average pulse repetition period;

a transmitting-end periodic cross-correlation function calculating unit 4012, used to: calculate a periodic cross-correlation function of two ZCD sequences $C_k^{(x)}$ and $C_k^{(y)}$ at the transmitting end according to the following expression:

$$C_{x,y}(\tau) = \sum_{k=0}^{K-1} \oplus c_k^{(x)} c_k^{(y)}$$,

where, K is a sequence period, and $\oplus$ denotes summation of modulo K;

a receiving-end receiving signal calculating unit 4013, used to: calculate the received signal $y_m(t)$ at a receiving end according to the following expression:

$$y_m(t) = \sum_{n=1}^{N} \sum_{l=0}^{L} h_{m,n}(l) x_n(t - lT_p) + n_m(t)$$,

wherein, $h_{m,n}(l)$ denotes the attenuation coefficient of signals in the $l^{th}$ path transmitted by the $n^{th}$ transmitting antenna and received on the $m^{th}$ receiving antenna, and $n_m(t)$ denotes the additive white Gaussian noise.

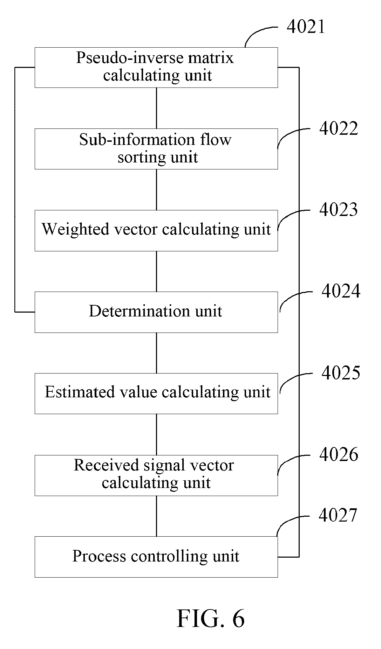

Preferably, the structure of the interference cancellation module 402 is shown in FIG. 6, comprising:

a pseudo-inverse matrix calculating unit 4021, used to use the zero forcing algorithm to obtain the pseudo-inverse matrix $G_1$ of a channel characteristic matrix $H$ according to the following expression:

$$G_1 = H^+ = (H^H H)^{-1} H^H$$,

a sub-information flow sorting unit 4022, used to sort the signal-to-noise ratio of various paths to obtain a sorted result $L = \{k_1, k_2, ..., k_{n_T}\}$, wherein $k_i = 1, 2, ..., n_T$, and detect that the sub-information flow with maximum signal-to-noise ratio after the sorting is $k_1 = \arg\min_j \| (G_1)_j \|^2$;

a weighted vector calculating unit 4023, used to calculate the weighted vector $w_{k_1} = (G_i)_{k_1}$, according to the zero forcing algorithm;

a determination unit 4024, used to: for the $k_1$, determine that the sub-information flow with maximum signal-to-noise ratio is valid when the weighted vector obtained according to the zero forcing algorithm meets the following expression:

$$w_{k_1}^T (H)_j = \begin{cases} 0 & j \neq k_1 \\ 1 & j = k_1 \end{cases} ;$$

an estimated value calculating unit 4025, used to separate the first determination statistic from the received signal vector $y_{k_1}$ according to the following expression:

$$y_{k_1} = w_{k_1}^T r_1 = \sum_{j=1}^{n_R} w_{k_1}^T (H)_j s_j + w_{k_1}^T \eta = s_{k_1} + w_{k_1}^T \eta \quad y_{k_i} = w_{k_i}^T r_i = \sum_{j=1}^{n_R} w_{k_i}^T (H)_j s_j + w_{k_i}^T \eta = s_{k_i} + w_{k_i}^T \eta \quad ,$$

wherein, $w_{k_1}^T \eta$ is the noise,

decode the $y_{k_1}$ according to the employed modulation method to obtain the estimated value of $s_{k_1}$ : $\hat{s}_{ki} = Q(y_{k_1})$, wherein, $Q$ denotes the quantization processing;

a received signal vector calculating unit 4026, used to re-modulate the $\hat{s}_{k_i}$ to obtain a corresponding received signal, and cancel out from the received signal vector to obtain a new received signal vector according to the following expression:

$$r_2 = y_1 - h_1 \hat{s}_{k_i} ,$$

wherein, $h_{k_i}$ is the $k_i$-th column of $H$;

a process controlling unit 4027, used to: return to the sub-information flow sorting unit 4022 when the entire received signal vector is not separated and obtained, and separate the sub-information flow with the second largest signal-to-noise ratio from the updated received signal vector.

Preferably, the determination unit 4024 is further used to: for $k_1$, when the weighted vector obtained according to the zero forcing algorithm does not meet the following expression,

$$w_{k_1}^T (H)_j = \begin{cases} 0 & j \neq k_1 \\ 1 & j = k_1 \end{cases} ;$$

determine that the sub-information flow with maximum signal-to-noise ratio is invalid, and return to the pseudo-inverse matrix calculating unit 4021.

Those ordinarily skilled in the art can understand that all or some of the steps of the abovementioned embodiments may be implemented using a computer program process, and the computer program may be stored in a computer-readable storage medium and executed on a corresponding hardware platform (such as a system, equipment, apparatus, device and so on), and during the execution, it comprises one of the steps of the method embodiment or a combination thereof.

Alternatively, all or some of the steps of the abovementioned embodiments can also be implemented with integrated circuits, and these steps may be made into individual integrated circuit modules respectively, or some of the modules or steps can be made into a single integrated circuit module to implement. Therefore, the present invention is not limited to any specific combination of hardware and software.

Each apparatus/functional module/functional unit in the abovementioned embodiments may be implemented with universal computing apparatus, they can be concentrated on a single computing apparatus or distributed on a network composed of a plurality of computing apparatuses.

When each device/functional module/functional unit in the abovementioned embodiments are implemented in the form of software functional module and sold or used as an individual product, they may be stored in a computer readable storage medium. The abovementioned computer-readable storage medium may be a read-only memory, magnetic or optical disk, and the like.

Anyone familiar with the technical field of the art within the scope of the present invention disclosing a technique can easily think of changes or replacements that shall fall within the protection scope of the present invention. Therefore, the protection scope of the present invention should be subject to the protection scope of the claims.

Industrial Applicability

The embodiment of the present invention provides a method and apparatus for implementing a wireless body area network (WBAN), introduces the multipath MIMO technology in the WBAN, and then, it performs a spread spectrum on the channels in the WBAN system, and then performs a connection interference cancellation on the spread-spectrum signal according to the intensity, enhances the equalization performance of the successive interference cancellation (SIC), which solves the problem that human tissue parameters lead to complex channel conditions, thereby affecting the signal propagation.

The embodiment of the present invention provides a successive interference cancellation mechanism of high-efficient priority sorting based on the ZF criterion, and because the mechanism uses the previous determination symbol as the input to cancel the current interference, the equalization performance of the SIC is subject to the determination error. By sorting the user relevance priorities, it determines the most reliable symbol and can appropriately reduce the determination error and achieves the diversity gain, and enhances the equalization performance of the SIC to some extent. Moreover, the present invention uses a ZCD (Zero Correlation Duration) code with large MAI tolerance as a spreading code, and overcomes the shortcoming of the poor orthogonality of the pseudo-noise (PN) code in the traditional PAM/DS system.

**Claims**

1.  A method for implementing wireless body area network, wherein the method is applied in a multipath multiple input and multiple output (MIMO) wireless body area network (WBAN) and comprises:

    performing a spread spectrum on channels in the WBAN system;
    performing a connection interference cancellation on spread-spectrum signals in accordance with an intensity.

2.  The method for implementing WBAN of claim 1, wherein, a pulse amplitude modulation (PAM/DS UWB) signal uses a zero correlation duration (ZCD) sequence as a spreading code, said performing a spread spectrum on channels in the WBAN system comprises:

    at a transmitting end, calculating signals on a $n^{th}$ transmitting antenna according to a following expression:

    $$x_n(t) = \sum_{i=-\infty}^{\infty} \sqrt{E_s} d_n(i) p(t - iT_s) ,$$

    wherein, $d_n(i)$ is an $i^{th}$ information symbol on the $n^{th}$ transmitting antenna and $d_n(i) = b_n(i)c_n$, $b_n(i)$ is a data sequence on the $n^{th}$ transmitting antenna, $c_n$ is an $n^{th}$-path ZCD sequence, $E_s$ is energy of a basic pulse $p^{(t)}$, and $T_s$ is an average pulse repetition period;
    at the transmitting end, calculating a periodic cross-correlation function of two ZCD sequences $C_k^{(x)}$ and $C_k^{(y)}$ according to a following expression:

    $$C_{x,y}(\tau) = \sum_{k=0}^{K-1} \oplus c_k^{(x)} c_k^{(y)} ,$$

    where, K is a sequence period, and $\oplus$ denotes summation of modulo K;
    at a receiving end, calculating a received signal $y_m(t)$ according to a following expression:

    $$y_m(t) = \sum_{n=1}^{N} \sum_{l=0}^{L} h_{m,n}(l) x_n(t - lT_p) + n_m(t) ,$$

    wherein, $h_{m,n}(l)$ denotes an attenuation coefficient of signals in an $l^{th}$ path transmitted by the $n^{th}$ transmitting antenna and received on an $m^{th}$ receiving antenna, and $n_m(t)$ denotes additive white Gaussian noise.

3.  The method for implementing WBAN of claim 2, wherein,
    for two ZCD sequences, when side lobes are minimum, both an autocorrelation function and a periodic cross-correlation function of the two ZCD sequences are 0.

4.  The method for implementing WBAN of claim 1, wherein, said performing a connection interference cancellation on spread-spectrum signals in accordance with an intensity comprises:

    using a zero forcing algorithm to obtain a pseudo-inverse matrix $G_i$ of a channel characteristic matrix $H$ according to a following expression:

    $$G_i = H^+ = (H^H H)^{-1} H^H,$$

    wherein, an initial value of i is 1, and i is not greater than the total number of paths $n_T$ at a transmitting end; sorting signal-to-noise ratios of various paths, and obtaining a sorted result $L = \{k_i, k_{i+1}, ..., k_{n_T}\}$, detecting that a sub-information flow with maximum signal-to-noise ratio after sorting is:

    $$k_i = \arg\min_j \left\| (G_i)_j \right\|^2 ;$$

    calculating a weighted vector $w_{k_i} = (G_i)_{k_i}$ according to the zero forcing algorithm;
    for $k_i$, determining that the sub-information flow with maximum signal-to-noise ratio is valid when the weighted vector obtained according to the zero forcing algorithm meets a following expression:

    $$w_{k_i}^T (H)_j = \begin{cases} 0 & j \neq k_i \\ 1 & j = k_i \end{cases} ;$$

    separating a first determination statistic from a received signal vector $y_{k_1}$ according to a following expression:

    $$y_{k_i} = w_{k_i}^T r_i = \sum_{j=1}^{n_R} w_{k_i}^T (H)_j s_j + w_{k_i}^T \eta = s_{k_i} + w_{k_i}^T \eta ,$$

    wherein, $w_{k_i}^T \eta$ is noise,
    decoding $y_{k_i}$ according to an employed modulation method to obtain an estimated value of $s_{k_1}$: $\hat{s}_{k_i} = Q(y_{k_1})$, wherein, wherein, $Q$ denotes quantization processing;
    re-modulating the to obtain a corresponding received signal, and cancelling out from the received signal vector to obtain a new received signal vector according to a following expression:

    $$r_{i+1} = y_1 - h_i \hat{s}_{k_i} ,$$

    wherein, $h_{k_i}$ is a $k_i$-th column of $H$;
    judging whether the value of i is equal to $n_T$ or not, when the value of i is not equal to $n_T$, the value of i added by 1, repeating steps from calculating the pseudo-inverse matrix $G_i$ to calculating the new received signal vector $\Gamma_{i+1}$.

5.  The method for implementing WBAN of claim 4, wherein, after detecting the sub-information flow $k_i$ with maximum signal-to-noise ratio, the method further comprises:

    for $k_1$, when the weighted vector obtained according to the zero forcing algorithm does not meet a following expression,

$$w_{k_1}^T(H)_j = \begin{cases} 0 & j \neq k_1 \\ 1 & j = k_1 \end{cases} ;$$

determining that the sub-information flow with maximum signal-to-noise ratio is invalid, and returning to calculate the pseudo-inverse matrix $G_i$.

6. The method for implementing WBAN of claim 4, wherein, said re-modulating the $\hat{S}_{ki}$, to obtain the corresponding received signal is:

inverse-modulating the $\hat{S}_{ki}$, according to a discovery modulation mode to obtain a corresponding received signal.

7. An apparatus for implementing wireless body area network, wherein, in a multipath MIMO WBAN, the apparatus comprises:

a spread spectrum module, configured to: perform a spread spectrum on channels in the WBAN system;
an interference cancellation module, configured to: perform a connection interference cancellation on spread-spectrum signals in accordance with an intensity.

8. The apparatus for implementing WBAN of claim 7, wherein, a pulse amplitude modulation (PAM/DS UWB) signal uses a zero correlation duration (ZCD) sequence as a spreading code, the spread spectrum module comprises:

a transmitting-end signal calculating unit, configured to: at a transmitting end, calculate signals on an $n^{th}$ transmitting antenna according to a following expression:

$$x_n(t) = \sum_{i=-\infty}^{\infty} \sqrt{E_s} d_n(i) p(t - iT_s) ,$$

wherein, $d_n(i)$ is an $i^{th}$ information symbol on the $n^{th}$ transmitting antenna and $d_n(i) = b_n(i)c_n$, $b_n(i)$ is a data sequence on the $n^{th}$ transmitting antenna, $c_n$ is an $n^{th}$-path ZCD sequence, is energy of a basic pulse $p^{(t)}$, and $T_s$ is an average pulse repetition period;
a transmitting-end periodic cross-correlation function calculating unit, configured to: at the transmitting end, calculate a periodic cross-correlation function of two ZCD sequences $C_k^{(x)}$ and $C_k^{(y)}$ according to a following expression:

$$C_{x,y}(\tau) = \sum_{k=0}^{K-1} \oplus c_k^{(x)} c_k^{(y)} ,$$

where, K is a sequence period, and $\oplus$ denotes summation of modulo K;
a receiving-end receiving signal calculating unit, configured to: at a receiving end, calculate a received signal $y_m(t)$ according to a following expression:

$$y_m(t) = \sum_{n=1}^{N} \sum_{l=0}^{L} h_{m,n}(l) x_n(t - lT_p) + n_m(t) ,$$

wherein, $h_{m,n}(l)$ denotes an attenuation coefficient of signals in an $l^{th}$ path transmitted by the $n^{th}$ transmitting antenna and received on an $m^{th}$ receiving antenna, and $n_m(t)$ denotes additive white Gaussian noise.

9. The apparatus for implementing WBAN of claim 8, wherein, the interference cancellation module comprises:

a pseudo-inverse matrix calculating unit, configured to: use a zero forcing algorithm to obtain a pseudo-inverse matrix $G_1$ of a channel characteristic matrix $H$ according to a following expression:

$$G_1 = H^+ = (H^H H)^{-1} H^H,$$

a sub-information flow sorting unit, configured to: sort signal-to-noise ratios of various paths to obtain a sorted result $L = \{k_1, k_2, ..., k_{n_T}\}$, wherein $k_i = 1, 2, ..., n_T$, and detect that a sub-information flow with maximum signal-to-noise ratio after sorting is $k_1 = \arg\min_j \|(G_i)_j\|^2$;

a weighted vector calculating unit, configured to: calculate a weighted vector $w_{k_i} = (G_i)_{k_1}$ according to the zero forcing algorithm;

a determination unit, configured to: for the $k_1$, determine that the sub-information flow with maximum signal-to-noise ratio is valid when the weighted vector obtained according to the zero forcing algorithm meets a following expression:

$$w_{k_1}^T (H)_j = \begin{cases} 0 & j \neq k_1 \\ 1 & j = k_1 \end{cases};$$

an estimated value calculating unit, configured to: separate a first determination statistic from a received signal vector $y_{k_1}$ according to a following expression:

$$y_{k_1} = w_{k_1}^T r_1 = \sum_{j=1}^{n_R} w_{k_1}^T (H)_j s_j + w_{k_1}^T \eta = s_{k_1} + w_{k_1}^T \eta,$$

wherein, $w_{k_1}^T \eta$ is noise,

decode $y_{k_1}$ according to an employed modulation method to obtain an estimated value of $s_{k_1}$: $\hat{s}_{k_i} = Q(y_{k_i})$ $\hat{s}_{k_i}$, wherein $Q$ denotes quantization processing;

a received signal vector calculating unit, configured to: re-modulate the $\hat{S}_{k_i}$ to obtain a corresponding received signal, and cancel out from a received signal vector to obtain a new received signal vector according to a following expression:

$$r_2 = y_1 - h_1 \hat{s}_{k_i}$$

wherein, $h_{k_i}$ is a $k_i$-th column of $H$;

a process controlling unit, configured to: when an entire received signal vector is not separated and obtained, return to the sub-information flow sorting unit to separate a sub-information flow with second largest signal-to-noise ratio from updated received signal vector.

10. The apparatus for implementing WBAN of claim 9, wherein,
the determination unit is further configured to: for $k_1$, when the weighted vector obtained according to the zero forcing algorithm meets a following expression,

$$w_{k_1}^T (H)_j = \begin{cases} 0 & j \neq k_1 \\ 1 & j = k_1 \end{cases};$$

determine that the sub-information flow with maximum signal-to-noise ratio is invalid, and return to the pseudo-inverse matrix calculating unit.

FIG. 1

Establish a WBAN system channel model — 201

Perform a spread spectrum on
the channels in the WBAN system — 202

Perform a connection interference cancellation
on the spread-spectrum signals according to
the intensity — 203

FIG. 2

$$i=1$$

$$G_i = H^+ = (H^H H)^{-1} H^H \quad \text{— } 301$$

$$k_i = \arg\min_{j} \left\| (G_i)_j \right\|^2 \quad \text{— } 302$$

Calculate a weighted vector
$$w_{k_i} = (G_i)_{k_i} \quad \text{— } 303$$

Is the maximum sub-information flow valid? — 304

No

Yes

Calculate a determination vector
$$y_{k_i} = w_{k_i}^T r_i \quad \text{305}$$

perform a determination quantization
$$\hat{s}_{k_i} = Q(y_{k_i})$$

Cancel the detected signal component
$$r_{i+1} = r_i - (H)_{k_i} \hat{s}_{k_i} \quad \text{— } 306$$

$$i = n_T \quad \text{307}$$

No

Yes

$$i = i+1$$

The detection ends

FIG. 3

Spread spectrum module — 401

Interference cancellation module — 402

FIG. 4

Spread spectrum module — 401

Transmitting-end signal calculating unit — 4011

Transmitting-end periodic cross-correlationfunction calculating unit — 4012

Receiving-end receiving signal calculating unit — 4013

FIG. 5

FIG. 6

<table>
<tr><td colspan="2"><h2>INTERNATIONAL SEARCH REPORT</h2></td><td>International application No.<br>**PCT/CN20131088407**</td></tr>
</table>

**A.  CLASSIFICATION OF SUBJECT MATTER**

H04W 84/12 (2009.01) i

According to International Patent Classification (IPC) or to both national classification and IPC

**B.  FIELDS SEARCHED**

Minimum documentation searched (classification system followed by classification symbols)

IPC: H04W; H04Q; H04L; H04B

Documentation searched other than minimum documentation to the extent that such documents are included in the fields searched

Electronic data base consulted during the international search (name of data base and, where practicable, search terms used)

CPRSABS; CNTXT; CNKI; DWPI: personal area network, body area network, spread spectrum, area, ban, spectrum, body, channel, spread, person, wban, interference elimination, zcd, wireless, mimo

**C.  DOCUMENTS CONSIDERED TO BE RELEVANT**

| Category* | Citation of document, with indication, where appropriate, of the relevant passages | Relevant to claim No. |
|---|---|---|
| X | CN 101558574 A (QUALCOMM INC.), 14 October 2009 (14.10.2009), description, page 1, lines 11-16 and page 2, lines 11-13 | 1, 7 |
| A | CN 101558574 A (QUALCOMM INC.), 14 October 2009 (14.10.2009), description, page 1, lines 11-16 and page 2, lines 11-13 | 2-6, 8-10 |
| X | CN 103179057 A (SHANDONG UNIVERSITY), 26 June 2013 (26.06.2013), description, paragraphs [0002]-[0004] | 1, 7 |
| A | CN 103179057 A (SHANDONG UNIVERSITY), 26 June 2013 (26.06.2013), description, paragraphs [0002]-[0004] | 2-6, 8-10 |
| X | US 2010309958 A1 (LAKKIS, I.), 09 December 2010 (09.12.2010), description, paragraphs [0007]-[0012] | 1, 7 |
| A | US 2010309958 A1 (LAKKIS, I.), 09 December 2010 (09.12.2010), description, paragraphs [0007]-[0012] | 2-6, 8-10 |

☐ Further documents are listed in the continuation of Box C.        ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 03 April 2014 (03.04.2014) | **21 May 2014 (21.05.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xiaoli** Telephone No.: (86-10) **62411389** |

Form PCT/ISA/210 (second sheet) (July 2009)

## INTERNATIONAL SEARCH REPORT
Information on patent family members

International application No.

**PCT/CN20131088407**

| Patent Documents referred in the Report | Publication Date | Patent Family | Publication Date |
|---|---|---|---|
| CN 101558574 A | 14.10.2009 | US 8363583 B2 | 29.01.2013 |
| | | TW 200835258 A | 16.08.2008 |
| | | EP 2092658 A2 | 26.08.2009 |
| | | KR 20090098890 A | 17.09.2009 |
| | | US 2008144560 A1 | 19.06.2008 |
| | | WO 2008076882 A2 | 26.06.2008 |
| | | WO 2008076882 A3 | 18.12.2008 |
| | | JP 2010514274 A | 30.04.2010 |
| | | JP 5307024 B2 | 02.10.2013 |
| | | KR 1096407 B1 | 21.12.2011 |
| | | IN 200903261 P1 | 01.01.2010 |
| CN 103179057 A | 26.06.2013 | None | |
| US 2010309958 A1 | 09.12.2010 | None | |

Form PCT/ISA/210 (patent family annex) (July 2009)